# EUROPÄISCHE PATENTSCHRIFT

(11) **EP 2 279 106 B1**
(45) Veröffentlichungstag und Bekanntmachung des Hinweises auf die Patenterteilung: **10.09.2014**
(21) Anmeldenummer: 09745672.7
(22) Anmeldetag: 06.05.2009
(51) Int. Cl.: B60T 8/36

(54) **HYDRAULIKAGGREGAT**
HYDRAULIC SYSTEM
GROUPE HYDRAULIQUE

(30) Priorität: 15.05.2008 DE 102008023808; 08.08.2008 DE 102008037047
(43) Veröffentlichungstag der Anmeldung: 02.02.2011
(73) Patentinhaber: Continental Teves AG & Co. oHG, 60488 Frankfurt (DE)
(72) Erfinder: GASTAUER, Heiko, 66679 Losheim am See (DE); HINZ, Axel, 61267 Neu-Anspach (DE); GREIFF, Uwe, 61352 Bad Homburg (DE); FISCHBACH-BORAZIO, Petra, 60488 Frankfurt (DE)
(86) Internationale Anmeldenummer: PCT/EP2009/055442
(87) Internationale Veröffentlichungsnummer: WO 2009/138339

(56) Entgegenhaltungen:
- EP-A- 1 707 463
- EP-A- 1 746 288
- WO-A-00/46089
- WO-A-97/37879
- WO-A-97/48583
- WO-A-98/47748
- WO-A-02/060734
- DE-A1- 10 245 069
- DE-A1- 10 339 882
- DE-A1- 19 959 670

## Beschreibung

Die Erfindung betrifft ein Hydraulikaggregat für eine schlupfgeregelte Bremsanlage, nach dem Oberbegriff des Patentanspruchs 1.

Aus DE 199 59 670 A1 ist ein Hydraulikaggregat bekannt, in dessen Aufnahmekörper Trenn- und Umschaltventilaufnahmebohrungen zueinander fluchtend ausgerichtet sind, die durch zwei Ventilreihen voneinander beabstandet sind, welche in mehreren Ventilaufnahmebohrungen Einlass- und Auslassventile aufweisen. Die Umschaltventilaufnahmebohrung befindet sich zwischen der die Auslassventile aufnehmenden Ventilreihe und einer quer zur Umschaltventilaufnahmebohrung in den Aufnahmekörper einmündenden Pumpenbohrung, die mit zwei Niederdruckspeicherbohrungen verbunden ist, welche infolge der gewählten Anordnung der Pumpenbohrung entfernt von den beiden Ventilreihen in den Aufnahmekörper einmünden.

Ein Hydraulikaggregat der vorgenannten Art ist bereits aus der EP 1 707 463 A2 bekannt. Das Hydraulikaggregat besteht aus einem blockförmigen Aufnahmekörper, der in mehreren Ventilaufnahmebohrungen einer ersten und zweiten Ventilreihe zur Blockierschutzregelung Ein- und Auslassventile aufnimmt. Im Aufnahmekörper ist ferner eine Pumpenbohrung angeordnete, die quer zur Einmündung der Ventilaufnahmebohrungen in den Aufnahmekörper ausgerichtet ist, mit einer Motoraufnahmebohrung, die senkrecht auf die Pumpenbohrung gerichtet ist, sowie mit mehreren die Ventilaufnahmebohrungen und die Pumpenbohrung verbindenden Druckmittelkanälen, die eine hydraulische Verbindung zwischen den in den Aufnahmekörper einmündenden Bremsdruckgeberanschlüssen und mehreren Radbremsanschlüssen herzustellen vermögen.

Nachteilig ist zu bewerten, dass die zur Antriebsschlupfals auch Fahrdynamikregelung erforderlichen Trennventil-Aufnahmebohrungen unmittelbar neben der die Auslassventile aufnehmenden zweiten Ventilreihe angeordnet sind, sodass relativ aufwendig herzustellende Druckmittelkanäle im Aufnahmekörper erforderlich sind, um die Bremsdruckgeberanschlüssen als auch die Ventilaufnahmebohrungen der ersten Ventilreihe an die Trennventil-Aufnahmebohrungen anschließen zu können. Ein weiterer Nachteil ergibt sich durch den erforderlichen Platzbedarf der Trennventil-Aufnahmebohrungen, sodass infolge der Notwendigkeit zur Positionierung der Niederdruckspeicherbohrungen zwischen den beiden Trennventil-Aufnahmebohrungen der unterhalb der zweiten Ventilreihe zur Verfügung stehende Freiraum ausgeschöpft ist.

Es ist daher die Aufgabe der Erfindung, ein Hydraulikaggregat der angegebenen Art möglichst einfach, kostengünstig und kompakt bauend auszubilden, ohne hierbei Einschränkungen hinsichtlich der Funktionalität, u.a. auch bezüglich der Tauchdichtheit und/oder des Geräuschverhaltens hinnehmen zu müssen.

Diese Aufgabe wird für ein Hydraulikaggregat der angegebenen Art mit den kennzeichnenden Merkmalen des Anspruchs 1 gelöst.

Weitere Merkmale und Vorteile der Erfindung werden im Nachfolgenden anhand der Beschreibung eines Ausführungsbeispiels erläutert.

Es zeigen:
- Fig. 1: in Perspektivdarstellung den Aufnahmekörper für das erfindungsgemäße Hydraulikaggregat in einer Draufsicht auf eine erste Flanschfläche des Aufnahmekörpers, in welche die Ventilaufnahmebohrungen einmünden,
- Fig. 2: das Hydraulikaggregat nach Fig. 1 in diametraler Ansicht, mit einer Draufsicht auf eine zweite Flanschfläche des Aufnahmekörpers, in welche die Bremsdruckgeberanschlüsse, die Pulsationsdämpferbohrungen, die Leckagebohrung und die Motoraufnahmebohrung einmünden.

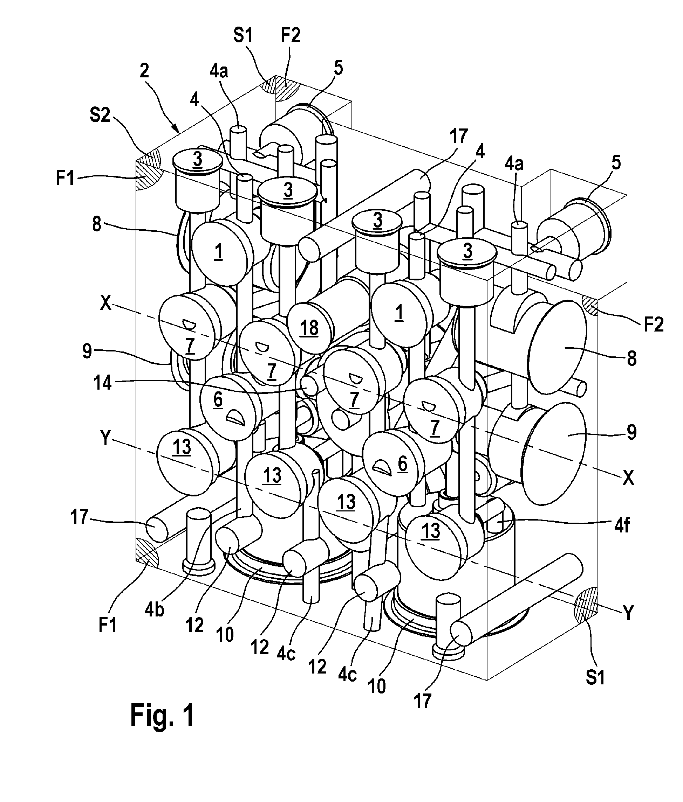

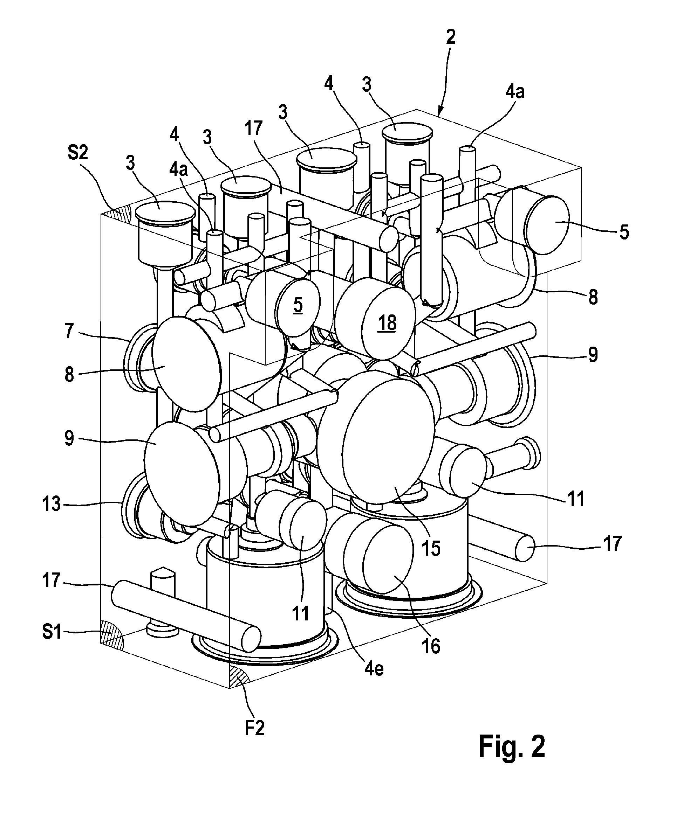

Das aus den Fig. 1, 2 ersichtliche Hydraulikaggregat weist einen blockförmigen Aufnahmekörper 2 für ein Antriebsschlupf-, Blockierschutz- und Fahrdynamikregelsystem eines Kraftfahrzeugs auf. Der Aufnahmekörper 2 nimmt hierzu in mehreren Ventilaufnahmebohrungen 7 einer ersten Ventilreihe X mehrere Einlassventile und in den Ventilaufnahmebohrungen 13 einer zweiten Ventilreihe Y mehrere Auslassventile auf, wobei beide Ventilreihen X, Y parallel angeordnet sind. Im Aufnahmekörper 2 ist weiterhin eine in Horizontalrichtung durchgehende Pumpenbohrung 9 zur Aufnahme einer zweikreisigen Radialkolbenpumpe angeordnet, die quer zur Einmündungsrichtung der Ventilaufnahmebohrungen 7, 13 zwischen den beiden Ventilreihen X, Y parallel ausgerichtet ist. In die Pumpenbohrung 9 mündet auf halber Länge eine Motoraufnahmebohrung 15 für einen Elektromotor ein, die parallel zu den Ventilaufnahmebohrungen 7, 13 in eine (zweite) Flanschfläche F2 des Aufnahmekörpers 2 gerichtet ist. Zum elektrischen Anschluss des Elektromotors an ein Steuergerät, das diametral zum Elektromotor an einer ersten Flanschfläche F1 des Aufnahmekörper 2 angeordnet ist, weist der Aufnahmekörper 2 eine Kabeldurchgangsbohrung 18 auf, die vom Elektromotor verdeckt ist, sobald der Elektromotor an der Flanschfläche F2 befestigt wird. Unmittelbar neben der zweiten Ventilreihe Y münden in Parallelanordnung in den Aufnahmekörper 2 ein paar Niederdruckspeicherbohrungen 10 quer zu den Ventilaufnahmebohrungen 7, 13 ein. Die Niederdruckspeicherbohrungen 10 sind ebenso wie die Ventilaufnahmebohrungen 7, 13 und die Pumpenbohrung 9 an Druckmittelkanälen angeschlossen, die im Aufnahmekörper 2 nach dem Rückförderprinzip die beiden Bremskreise verbinden. Die Druckmittelkanäle stellen somit über die Niederdruckspeicher 10, die Ventilaufnahmebohrungen 7, 13 und die Pumpenbohrung 9 die gewünschte hydraulische Verbindung zwischen zwei in den Aufnahmekörper 2 einmündenden Bremsdruckgeberanschlüsse 5 und mehreren Radbremsanschlüsse 3 her.

Zur Minimierung des Herstellaufwands als auch mit dem Ziel, die Funktionalität des Hydraulikaggregats mit Blick auf einen autonomen Bremsenbetrieb (Antriebsschlupf- und Fahrdynamikregelung) zu erhöhen, werden auf Basis der bereits erläuterten Bohrungen und Druckmittelkanäle im Aufnahmekörper 2 weitere erforderliche Bohrungen in dem Aufnahmekörper 2 optimal platziert, die im Nachfolgenden beschrieben werden.

Deshalb sind außerhalb zu den beiden Ventilreihen X, Y zwei Trennventil-Aufnahmebohrungen 1 vorgesehen, die erfindungsgemäß zwischen mehreren, in den Aufnahmekörper 2 einmündenden Radbremsanschlüssen 3 und der ersten Ventilreihe X im Aufnahmekörper 2 bauraumoptimiert angeordnet sind. Die Trennventil-Aufnahmebohrungen 1 sind als Sackbohrungen ausgeführt, die jeweils in Querlage zwischen den zwei Radbremsanschlüssen 3 eines Bremskreises in den Aufnahmekörper 2 einmünden. Jeweils zwischen zwei Radbremsanschlüssen 3 eines Bremskreises verbleibt ein hinreichender Abstand zur Hindurchführung von einem mit der zugehörigen Trennventil-Aufnahmebohrung 1 verbundenen Druckmittelkanal 4, der den für einen Bremskreis erforderlichen Bremsdruckgeberanschluss 5 über die zugehörige Trennventil-Aufnahmebohrung 1 mit den innerhalb eines Bremskreises angeordneten beiden Ventilaufnahmebohrungen 7 der ersten Ventilreihe X verbindet.

Aus der Figur 1 geht hervor, dass die erste Ventilreihe X zwischen den beiden Trennventil-Aufnahmebohrungen 1 und den beiden Umschaltventil-Aufnahmebohrungen 6 angeordnet ist, wozu die Ventilaufnahmebohrungen 7 der ersten Ventilreihe X als auch die Trennventil- und Umschaltventilaufnahmebohrungen 1, 6 in die erste Flanschfläche F1 des Aufnahmekörpers 2 in Parallelanordnung einmünden. Die Trennventil- und Umschaltventilaufnahmebohrungen 1, 6 sind jeweils seitlich versetzt zu den Ventilaufnahmebohrungen 7 der ersten Ventilreihe X im Aufnahmekörper 2 angeordnet, womit sich eine bestmögliche Raumausnutzung innerhalb des Aufnahmekörpers 2 ergibt. Ein weiterer herstelltechnischer Vorteil ergibt sich durch die fluchtende Ausrichtung der Trennventil-Aufnahmebohrungen 1 gegenüber den Umschaltventil-Aufnahmebohrungen 6, wozu die Trennventil-Aufnahmebohrungen 1 zwischen jeweils einem paar Radbremsanschlüssen 3 angeordnet sind.

Die beiden Trennventil-Aufnahmebohrungen 1 nehmen zwei in Grundstellung geöffnete Wegesitzventile auf, die im autonomen Bremsenbetrieb elektromagnetisch geschlossen werden, wodurch die Verbindung zwischen den Bremsdruckgeberanschlüssen 5 und den Ventilaufnahmebohrungen 7 in der ersten Ventilreihe X unterbrochen ist. In die Umschaltventil-Aufnahmebohrungen 6 werden gleichfalls Wegesitzventile eingesetzt, die in ihrer Grundstellung die Verbindung zwischen den Bremsdruckgeberanschlüssen 5 und der Saugseite der Pumpenbohrung 9 sperren, jedoch im autonomen Bremsenbetrieb elektromagnetisch geöffnet sind.

Ferner zeigt die Figur 1 als auch die Figur 2 gut erkennbar, dass zwei Geräuschdämpfungskammern 8 quer zu den Trennventil-Aufnahmebohrungen 1 in diametraler Anordnung in jeweils eine Seitenfläche S1 des Aufnahmekörpers 2 einmünden, die von der ersten und der zweiten Flanschfläche F1, F2 begrenzt ist. Die beiden Geräuschdämpfungskammern 8 sind parallel zur Pumpenbohrung 9 oberhalb der ersten Ventilreihe X bis etwa an die Ventilaufnahmebohrungen 1 heranreichend, angeordnet und jeweils von einem Druckmittelkanal 4a von oben nach unten quer durchdrungen, wozu der Druckmittelkanal 4a sich zum Anschluss der beiden Geräuschdämpfungskammern 8 an die Pumpenbohrung 9 von einer weiteren Seitenfläche S2 des Aufnahmekörpers 2 bis in den Hochdruckbereich der Pumpenbohrung 9 erstreckt.

Zwischen den für die beiden Geräuschdämpfungskammern 8 erforderlichen zwei Druckmittelkanälen 4a münden in die weitere Seitenfläche S2 sämtliche für eine Zweikreisbremsanlage erforderlichen Radbremsanschlüsse 3 ein. Die Druckmittelkanäle 4a sind mittels geeigneter Einpresskörper an den Einmündungsstellen der beiden Druckmittelkanäle 4a in der weiteren Seitenfläche S2 nach der Bohroperation druckmitteldicht verschlossen. Aus der Figur 1 ist zu erkennen, dass die weitere Seitenfläche S2 von den beiden Flanschflächen F1, F2 und den diametralen Seitenflächen S1 begrenzt ist, wobei die beiden Bremsdruckgeberanschlüsse 5 oberhalb der Geräuschdämpfungskammern 8 unmittelbar in die zweite Flanschfläche F2 einmünden und die Bremsdruckgeberanschlüsse 5 durch die in die Seitenfläche S1 einmündenden Geräuschdämpfungskammern 8 von den in der Ebene der Bremsdruckgeberanschlüsse 5 angeordneten Radbremsanschlüssen 3 beabstandet sind.

Weiterhin münden Drucksensorbohrungen 12 in die erste Flanschfläche F1 ein, die neben oder zwischen den Niederdruckspeicherbohrungen 10 angeordnet sind, wobei eine der Drucksensorbohrungen 12 mit einem die Trennventil- und Umschaltventilaufnahmebohrung 1, 6 durchdringenden Druckmittelkanal 4b verbunden ist, der eine Verbindung zu einem der beiden Bremsdruckgeberanschlüsse 5 aufweist. Die für die Drucksensorbohrung 12 vorgesehene Anschlussstelle ist vertikal fluchtend zu den das Trennventil- und Umschaltventil aufnehmenden Ventilaufnahmebohrungen 1, 6 ausgerichtet, die den horizontalen Abstand zwischen den Ventilaufnahmebohrungen 7, 13 der ersten und zweiten Ventilreihe X, Y zur Aufnahme und Verbindung mit dem Druckmittelkanal 4b nutzen, sodass eine verhältnismäßig einfacher Bohrvorgang zur Herstellung der Druckmittelverbindung zwischen der vorgenannten Elementen zustande kommt.

Ferner ist wenigstens eine der weiteren Drucksensorbohrungen 12 mit einer Ventilaufnahmebohrung 13 der zweiten Ventilreihe Y verbunden, wozu der Aufnahmekörper 2 auf der zur weiteren Seitenfläche S2 entgegengesetzten Seitenfläche von wenigstens einem Druckmittelkanal 4c durchdrungen ist, der die weitere Drucksensorbohrung 12 in Richtung auf die zugehörige Ventilaufnahmebohrung 13 in der zweiten Ventilreihe Y durchquert.

Die erwähnten Drucksensorbohrungen 12 ermöglichen je nach eingangs beschriebenem Anschlussbild in Verbindung mit geeigneten Drucksensoren die Erfassung des am Radbremsanschluss 3 und am Bremsdruckgeberanschluss 5 anstehenden Hydraulikdrucks, um mit Hilfe einer geeigneten Ventilregelung einen bedarfsgerechten, komfortablen Betrieb der Bremsanlage zu gewährleisten.

Ferner ist zur Aufnahme eines Drehsignal- und/oder Positionsgebers eine Sensorbohrung 14 zwischen den beiden Ventilreihen X, Y vorgesehen, um die Position der Pumpkolben in der Pumpenbohrung 9 zu erfassen, wozu die Sensorbohrung 14 aus Richtung der ersten Flanschfläche F1 in die quer zur Pumpenbohrung 9 einmündenden Motoraufnahmebohrung 15 einmündet, in welcher ein Pumpenantrieb eingesetzt ist.

Die Figur 2 zeigt den Aufnahmekörper 2 in einer Ansicht auf die zweite Flanschfläche F2, aus der etwa mittig im Aufnahmekörper 2 angeordnet die Motoraufnahmebohrung 15 ersichtlich ist. Ferner ist zu erkennen, dass zwei Pulsationsdämpferbohrungen 11 zwischen der Pumpenbohrung 9 und den beiden Niederdruckspeicherbohrungen 10 in die zweite Flanschfläche F2 des Aufnahmekörpers 2 einmünden. Jede Pulsationsdämpferbohrung 11 steht mit einem Druckmittelkanal 4d in Verbindung, der jeweils eine der beiden Niederdruckspeicherbohrungen 10 mit dem Saugbereich der Pumpenbohrung 9 verbindet.

Zwischen den beiden Niederdruckspeicherbohrungen 10 mündet eine Leckagebohrung 16 aus Richtung der zweiten Flanschfläche F2 in den Aufnahmekörper 2 ein, wobei die Leckagebohrung 16 über einen zwischen den Niederdruckspeicherbohrungen 10 angeordneten Druckkanal 4e an der Motoraufnahmebohrung 15 angeschlossen ist, in welche die innerhalb der Pumpenbohrung 9 entstehende Pumpenleckage gelangt.

Durch die Leckagebohrung 16 ist die Tauchdichtheit als auch die Leckagesicherheit des Hydraulikaggregats gewährleistet, wozu die Leckagebohrung 16 als Sackbohrung ausgebildet ist. Diese Leckagebohrung 16 mündet in einem im Wesentlichen durch die Lage und Größe der Motoraufnahmebohrung 15 definierten Abstand parallel zur Kabeldurchgangsbohrung 18 zwischen den Niederdruckspeicherbohrungen 10 und der zweiten Ventilreihe Y in den Aufnahmekörper 2 ein. Hierdurch ist gewährleistet, dass mit dem Einsetzen des Elektromotors in die Motoraufnahmebohrung 15 nicht nur die elektrische Kontaktierung des Elektromotors innerhalb der Kabeldurchgangsbohrung 18 geschlossen wird, sondern dass auch die Leckageaufnahmebohrung 16 vorzugsweise durch eine entsprechende Gestalt des Elektromotors verdeckt und geschlossen werden kann. Das aus den Fig. 1, 2 ersichtliche Hydraulikaggregat ist für eine Zweikreisbremssystem mit radindividueller Bremsdruckregelung ausgelegt, mit der Besonderheit, dass jede in der zweiten Ventilreihe Y angeordnete Ventilaufnahmebohrung 13 jeweils über einen eigenen Druckmittelkanal 4f an der nächstgelegenen Niederdruckspeicherbohrung 10 angeschlossen ist, sodass in jeden Boden beider Niederdruckspeicherbohrungen 10 jeweils zwei mit der zweiten Ventilreihe Y verbunden Druckmittelkanäle 4f einmünden, zwischen denen jeweils der Druckmittelkanal 4d angeordnet ist, der jede Saugseite der Pumpenbohrung 8 über die zugehörige Pulsationsdämpferbohrung 11 mit der nächstgelegenen Niederdruckspeicherbohrung 5 verbindet. Die beiden Niederdruckspeicherbohrungen 10 weisen damit möglichst kurze Verbindungen zur Pumpensaugseite der Pumpenbohrung 9 als auch zum Anschluss an die Ventilaufnahmebohrungen 13 der zweiten Ventilreihe Y auf, wodurch sich für den Sekundärbereich jedes Bremskreises (d.h. zwischen den in Grundstellung geschlossenen Auslassventilen der zweiten Ventilreihe Y und der Pumpensaugseite) ein möglichst kleines Totraumvolumen ergibt, um die Evakuierung und die Befüllung des Hydraulikaggregats mit Bremsflüssigkeit möglichst einfach durchführen zu können.

Zur Befestigung des zum Ansteuern des Elektromotors und der Ein- und Auslassventile vorgesehenen Steuergeräts an der ersten Flanschfläche F1 als auch zur Befestigung des zum Antrieb der Radialkolbenpumpe erforderlichen Elektromotors an der diametral zur ersten Flanschfläche F1 angeordneten zweiten Flanschfläche F2 ist der Aufnahmekörper 2 mit mehreren Durchgangsbohrungen 17 versehen, die von mehreren Schrauben nach Art eines Zugankers durchdrungen sind, um das Steuergerät und den Elektromotor unter gleichmäßigen Anpresskräften am Aufnahmekörper 2 einfach, sicher und flüssigkeitsdicht zu fixieren.
Durch diese Zugankerverbindung ergibt sich ein kosten- und bauraumgünstiges Konzept, das eine optimale Raumausnutzung innerhalb des Steuergeräts ermöglicht. Ferner lassen sich bei Wunsch oder Bedarf etwaige Leckagen der Pumpe in einem geschlossenen Reservoir des Elektromotors sammeln, da dieser auf der Leckagebohrung 16 aufgesetzt ist und dort dichtet.

Durch die beschriebene Ausführung der Druckmittelkanäle 4, 4a-e wird in Verbindung mit der optimierten Platzierung der Ventilaufnahmebohrungen 1, 6, 7, 13 die automatengerechte Herstellung des Hydraulikaggregats vereinfacht, da anstelle von fünf lediglich vier Bearbeitungsrichtungen in der Fertigung zu berücksichtigen sind.

### Bezugszeichenliste

- 1: Trennventil-Aufnahmebohrung
- 2: Aufnahmekörper
- 3: Radbremsanschlüsse
- 4: Druckmittelkanal
- 5: Bremsdruckgeberanschluss
- 6: Umschaltventil-Aufnahmebohrung
- 7: Ventilaufnahmebohrung
- 8: Geräuschdämpfungskammer
- 9: Pumpenbohrung
- 10: Niederdruckspeicherbohrung
- 11: Pulsationsdämpferbohrung
- 12: Drucksensorbohrung
- 13: Ventilaufnahmebohrung
- 14: Sensorbohrung
- 15: Motoraufnahmebohrung
- 16: Leckagebohrung
- 17: Durchgangsbohrung
- 18: Kabeldurchgang
- X: Ventilreihe
- Y: Ventilreihe
- S1: Seitenfläche
- S2: Seitenfläche
- F1: Flanschfläche
- F2: Flanschfläche

## Patentansprüche

1. Hydraulikaggregat für eine schlupfgeregelte Bremsanlage,
- mit einem vorzugsweise blockförmigen Aufnahmekörper (2), der in mehreren Ventilaufnahmebohrungen (7, 13) einer ersten Ventilreihe (X) Einlassventile und in einer zweiten Ventilreihe (Y) Auslassventile aufnimmt,
- mit einer im Aufnahmekörper (2) angeordneten Pumpenbohrung (9), die quer zur Einmündungsrichtung der Ventilaufnahmebohrungen (7, 13) zwischen den beiden Ventilreihen (X, Y) ausgerichtet ist,
- mit zwischen der ersten und der zweiten Ventilreihe (X, Y) angeordneten Umschaltventilaufnahmebohrungen (6), die an der Saugseite der Pumpenbohrung (9) und einem paar Bremsdruckgeberanschlüsse (5) angeschlossen sind,
- mit im Aufnahmekörper (2) außerhalb zu den beiden Ventilreihen (X, Y) angeordneten Trennventil-Aufnahmebohrungen (1),
- mit einem paar Niederdruckspeicherbohrungen (10) in Parallelanordnung, die entfernt von der ersten Ventilreihe (X) neben der zweiten Ventilreihe (Y) in den Aufnahmekörper (2) einmünden,
**dadurch gekennzeichnet, dass** die Trennventil-Aufnahmebohrungen (1) zwischen mehreren, in einer Seitenfläche (S2) des Aufnahmekörpers (2) einmündenden Radbremsanschlüssen (3) und der ersten Ventilreihe (X) angeordnet sind, und dass in eine erste, die Trenn- und Umschaltventilaufnahmebohrungen (1, 6) aufweisende Flanschfläche (F1) mehrere Drucksensorbohrungen (12) einmünden, die neben oder zwischen den Niederdruckspeicherbohrungen (10) angeordnet sind, wobei eine der Drucksensorbohrungen (12) mit einem die Trennventil- und Umschaltventilaufnahmebohrung (1, 6) durchdringenden Druckmittelkanal (4b) verbunden ist, der eine Verbindung zu einem der beiden Bremsdruckgeberanschlüsse (5) aufweist, wozu die eine Drucksensorbohrung (12) fluchtend zu dem die Trennventil- und Umschaltventilaufnahmebohrung (1, 6) durchdringenden Druckmittelkanal (4b) ausgerichtet ist.

2. Hydraulikaggregat nach Anspruch 1, **dadurch gekennzeichnet, dass** die Trennventil-Aufnahmebohrungen (1) als Sackbohrungen ausgeführt sind, die jeweils in Querlage zwischen zwei Radbremsanschlüssen (3) eines Bremskreises in den Aufnahmekörper (2) einmünden.

3. Hydraulikaggregat nach Anspruch 1 oder 2, **dadurch gekennzeichnet, dass** jeweils zwischen zwei Radbremsanschlüssen (3) ein Abstand zur Hindurchführung von einem mit den Trennventilaufnahmebohrungen (1) verbundenen Druckmittelkanal (4) vorgesehen ist, der den einem Bremskreis zugehörigen Bremsdruckgeberanschluss (5) über die zugehörige Trennventil-Aufnahmebohrung (1) mit den dem jeweiligen Bremskreis zugehörigen beiden Ventilaufnahmebohrungen der ersten Ventilreihe (X) verbindet.

4. Hydraulikaggregat nach Anspruch 1, **dadurch gekennzeichnet, dass** zwischen den Trennventil-Aufnahmebohrungen (1) und den Umschaltventil-Aufnahmebohrungen (6) die erste Ventilreihe (X) angeordnet ist, wobei die Ventilaufnahmebohrungen (7) der ersten Ventilreihe (X) als auch die Trennventil- und Umschaltventilaufnahmebohrungen (1, 6)in die erste Flanschfläche (F1) des Aufnahmekörpers (2) in Parallelanordnung einmünden.

5. Hydraulikaggregat nach einem der vorangegangenen Ansprüche, **dadurch gekennzeichnet, dass** die Trennventil-Aufnahmebohrungen (1) fluchtend zu den Umschaltventil-Aufnahmebohrung (6) zwischen jeweils einem paar Radbremsanschlüssen (3) angeordnet sind.

6. Hydraulikaggregat nach Anspruch 4, dadurch **gekennzeich-net,** dass zwei Geräuschdämpfungskammern (8) quer zu den Trennventil-Aufnahmebohrungen (1) in diametraler Anordnung in jeweils eine Seitenfläche (S1) des Aufnahmekörpers (2) einmünden, die von der ersten und einer zweiten Flanschfläche (F1, F2) begrenzt ist.

7. Hydraulikaggregat nach Anspruch 6, **dadurch gekennzeichnet, dass** die beiden Geräuschdämpfungskammern (8) parallel zur Pumpenbohrung (9) angeordnet sind und jeweils von einem Druckmittelkanal (4a) quer durchdrungen sind, der sich zum Anschluss der Geräuschdämpfungskammern (8) an die Pumpenbohrung (9) von einer weiteren Seitenfläche (S2) des Aufnahmekörpers (2) bis in den Hochdruckbereich der Pumpenbohrung (9) erstreckt.

8. Hydraulikaggregat nach Anspruch 7, **dadurch gekennzeichnet, dass** zwischen den für die beiden Geräuschdämpfungskammern (8) erforderlichen zwei Druckmittelkanälen (4a) in die weitere Seitenfläche (S2) sämtliche für eine Zweikreisbremsanlage erforderlichen Radbremsanschlüsse (3) einmünden, wobei die Einmündungsstellen der beiden Druckmittelkanäle (4a) in der weiteren Seitenfläche (S2) mittels Einpresskörper druckmitteldicht verschlossen sind.

9. Hydraulikaggregat nach Anspruch 6, **dadurch gekennzeichnet, dass** die beiden Bremsdruckgeberanschlüsse (5) unmittelbar in die zweite Flanschfläche (F2) einmünden, wobei die Bremsdruckgeberanschlüsse (5) durch die in die Seitenfläche (S1) einmündenden Geräuschdämpfungskammern (8) von den in der Ebene der Bremsdruckgeberan-schlüsse (5) angeordneten Radbremsanschlüssen (3) beabstandet sind.

10. Hydraulikaggregat nach Anspruch 6, dadurch **gekennzeich-net,** dass zwei Pulsationsdämpferbohrungen (11) zwischen der Pumpenbohrung (9) und den beiden Niederdruckspeicherbohrungen (10) aus Richtung der zweiten Flanschfläche (F2) in den Aufnahmekörper (2) einmünden, wobei jede Pulsationsdämpferbohrung (11) an einem Druckmittelkanal (4d) angeschlossen ist, der jeweils eine der beiden Niederdruckspeicherbohrungen (10) mit dem Saugbereich der Pumpenbohrung (9) verbindet.

11. Hydraulikaggregat nach Anspruch 1, **dadurch gekennzeichnet, dass** wenigstens eine der Drucksensorbohrungen (12) mit einer Ventilaufnahmebohrung (13) der zweiten Ventilreihe (Y) verbunden ist, wozu der Aufnahmekörper (2) auf der zur weiteren Seitenfläche (S2) entgegengesetzten Seitenfläche von wenigstens einem Druckmittelkanal (4c) durchdrungen ist, der die Drucksensorbohrung (12) in Richtung auf die zugehörige Ventilaufnahmebohrung (13) in der zweiten Ventilreihe (Y) durchquert.

12. Hydraulikaggregat nach Anspruch 1, **dadurch gekennzeichnet, dass** eine Sensorbohrung (14) zur Aufnahme eines Drehsignal- und/oder Positionsgebers zwischen den beiden Ventilreihen (X, Y) vorgesehen ist, um die Position der Pumpkolben in der Pumpenbohrung (9) zu erfassen, wozu die Sensorbohrung (14) in eine quer zur Pumpenbohrung (9) einmündenden Motoraufnahmebohrung (15) einmündet, in welcher ein Pumpenantrieb eingesetzt ist.

13. Hydraulikaggregat nach Anspruch 1, **dadurch gekennzeichnet, dass** eine Leckagebohrung (16) zwischen den beiden Niederdruckspeicherbohrungen (10) aus Richtung einer zweiten, diametral zur ersten Flanschfläche (F1) ausgerichteten Flanschfläche (F2) in den Aufnahmekörper (2) einmündet, wobei die Leckagebohrung (16) über einen zwischen den Niederdruckspeicherbohrungen (10) angeordneten Druckkanal (4e) an der Pumpenbohrung (9) angeschlossen ist.

14. Hydraulikaggregat nach Anspruch 6, **dadurch gekennzeichnet, dass** zur Befestigung eines Steuergeräts an der ersten Flanschfläche (F1) und eines Elektromotors an der zweiten Flanschfläche (F2) der Aufnahmekörper (2) mit mehreren Durchgangsbohrungen (17) versehen ist, die von mehreren Schrauben nach Art eines Zugankers durchdrungen sind, um das Steuergerät und den Elektromotor am Aufnahmekörper (2) zu befestigen.

## Claims

1. Hydraulic system for a slip-controlled brake installation,
- with a preferably block-shaped reception body (2) which receives inlet valves in a plurality of valve reception bores (7, 13) of a first valve row (X) and outlet valves in a second valve row (Y),
- with a pump bore (9) which is arranged in the reception body (2) and which is oriented transversely with respect to the direction of issue of the valve reception bores (7, 13) between the two valve rows (X, Y),
- with changeover-valve reception bores (6) which are arranged between the first and the second valve row (X, Y) and which are connected to the suction side of the pump bore (9) and to a pair of brake-pressure transducer connections (5),
- with isolating-valve reception bores (1) arranged in the reception body (2) outside the two valve rows (X, Y),
- with a pair of low-pressure accumulator bores (10) in a parallel arrangement, which issue into the reception body (2) remotely from the first valve row (X) and next to the second valve row (Y),
**characterized in that** the isolating-valve reception bores (1) are arranged between a plurality of wheel-brake connections (3) issuing into a lateral surface (S2) of the reception body (2) and the first valve row (X), and **in that** a plurality of pressure sensor bores (12) issue into a first flange surface (F1) which has the isolating-valve and changeover-valve reception bores (1, 6) and are arranged next to or between the low-pressure accumulator bores (10), one of the pressure sensor bores (12) being connected to a pressure-medium duct (4b) which penetrates through the isolating-valve and changeover-valve reception bore (1, 6) and which has a connection to one of the two brake-pressure transducer connections (5), for which purpose said one pressure sensor bore (12) is oriented in alignment with the pressure-medium duct (4b) penetrating through the isolating-valve and changeover-valve reception bore (1, 6).

2. Hydraulic system according to Claim 1, **characterized in that** the isolating-valve reception bores (1) are designed as blind bores which issue into the reception body (2) in each case in a transverse position between two wheel-brake connections (3) of a brake circuit.

3. Hydraulic system according to Claim 1 or 2, **characterized in that** a clearance is provided in each case between two wheel-brake connections (3) for the purpose of leading through a pressure-medium duct (4) which is connected to the isolating-valve reception bores (1) and which connects the brake-pressure transducer connection (5) belonging to a brake circuit, via the associated isolating-valve reception bore (1), to the two valve reception bores of the first valve row (X) which are associated with the respective brake circuit.

4. Hydraulic system according to Claim 1, **characterized in that** the first valve row (X) is arranged between the isolating-valve reception bores (1) and the changeover-valve reception bores (6), the valve reception bores (7) of the first valve row (X) and the isolating-valve and changeover-valve reception bores (1, 6) issuing in a parallel arrangement into the first flange surface (F1) of the reception body (2).

5. Hydraulic system according to one of the preceding claims, **characterized in that** the isolating-valve reception bores (1) are arranged in alignment with the changeover-valve reception bores (6) in each case between a pair of wheel-brake connections (3).

6. Hydraulic system according to Claim 4, **characterized in that** two noise damping chambers (8) issue transversely with respect to the isolating-valve reception bores (1), in a diametral arrangement, in each case into a lateral surface (S1) of the reception body (2), which lateral surface is delimited by the first and a second flange surface (F1, F2).

7. Hydraulic system according to Claim 6, **characterized in that** the two noise damping chambers (8) are arranged parallel to the pump bore (9) and are in each case penetrated transversely by a pressure-medium duct (4a) which, for connecting the noise damping chambers (8) to the pump bore (9), extends from a further lateral surface (S2) of the reception body (2) into the high-pressure region of the pump bore (9).

8. Hydraulic system according to Claim 7, **characterized in that**, between the two pressure-medium ducts (4a) required for the two noise damping chambers (8), all the wheel-brake connections (3) necessary for a dual-circuit brake installation issue into the further lateral surface (S2), the points of issue of the two pressure-medium ducts (4a) in the further lateral surface (S2) being closed, tight to pressure medium, by means of press-in bodies.

9. Hydraulic system according to Claim 6, **characterized in that** the two brake-pressure transducer connections (5) issue directly into the second flange surface (F2), the brake-pressure transducer connections (5) being spaced apart, by the noise damping chambers (8) issuing into the lateral surface (S1), from the wheel-brake connections (3) arranged in the plane of the brake-pressure transducer connections (5).

10. Hydraulic system according to Claim 6, **characterized in that** two pulsation damper bores (11) issue into the reception body (2) from the direction of the second flange surface (F2) between the pump bore (9) and the two low-pressure accumulator bores (10), each pulsation damper bore (11) being connected to a pressure-medium duct (4d) which in each case connects one of the two low-pressure accumulator bores (10) to the suction region of the pump bore (9).

11. Hydraulic system according to Claim 1, **characterized in that** at least one of the pressure sensor bores (12) is connected to a valve reception bore (13) of the second valve row (Y), for which purpose the reception body (2) is penetrated, on the lateral surface opposite to the further lateral surface (S2), by at least one pressure-medium duct (4c) which traverses the pressure sensor bore (12) in the direction of the associated valve reception bore (13) in the second valve row (Y).

12. Hydraulic system according to Claim 1, **characterized in that** a sensor bore (14) is provided for receiving a rotary-signal and/or position transducer between the two valve rows (X, Y), in order to detect the position of the pumping pistons in the pump bore (9), for which purpose the sensor bore (14) issues into a motor reception bore (15) which issues transversely with respect to the pump bore (9) and in which a pump drive is inserted.

13. Hydraulic system according to Claim 1, **characterized in that** a leakage bore (16) issues into the reception body (2) from the direction of a second flange surface (F2), oriented diametrally with respect to the first flange surface (F1), between the two low-pressure accumulator bores (10), the leakage bore (16) being connected to the pump bore (9) via a pressure duct (4e) arranged between the low-pressure accumulator bores (10).

14. Hydraulic system according to Claim 6, **characterized in that**, to fasten a control apparatus to the first flange surface (F1) and an electric motor to the second flange surface (F2), the reception body (2) is provided with a plurality of through bores (17) which are penetrated by a plurality of screws in the manner of a tie rod, in order to fasten the control apparatus and electric motor to the reception body (2).

## Revendications

1. Groupe hydraulique pour un système de freinage à régulation antipatinage,
- comprenant un corps de réception (2) de préférence en forme de bloc, lequel corps de réception reçoit des soupapes d'entrée dans plusieurs alésages de réception de soupape (7, 13) d'une première rangée de soupapes (X) et des soupapes de sortie dans une deuxième rangée de soupapes (Y),
- comprenant un alésage de pompe (9) disposé dans le corps de réception (2), lequel alésage de pompe est orienté transversalement à la direction dans laquelle les alésages de réception de soupape (7, 13) débouchent entre les deux rangées de soupapes (X, Y),
- comprenant des alésages de réception de soupape d'inversion (6) disposés entre les première et deuxième rangées de soupapes (X, Y), lesquels sont raccordés au côté aspiration de l'alésage de pompe (9) et à une paire de raccords de générateur de pression de freinage (5),
- comprenant des alésages de réception de soupape de séparation (1) disposés dans le corps de réception (2) à l'extérieur des deux rangées de soupapes (X, Y),
- comprenant une paire d'alésages d'accumulateur basse pression (10) en agencement en parallèle, lesquels débouchent dans le corps de réception (2) de manière éloignée de la première rangée de soupapes (X), près de la deuxième rangée de soupapes (Y),
**caractérisé en ce que** les alésages de réception de soupape de séparation (1) sont disposés entre plusieurs raccords de frein de roue (3) débouchant dans une surface latérale (S2) du corps de réception (2) et la première rangée de soupapes (X), et **en ce que** plusieurs alésages de capteur de pression (12) débouchent dans une première surface de flanc (F1) comprenant les alésages de réception de soupape de séparation et d'inversion (1, 6), lesquels alésages de capteur de pression sont disposés près des alésages d'accumulateur basse pression (10) ou entre ceux-ci, l'un des alésages de capteur de pression (12) étant relié à un conduit de fluide sous pression (4b) traversant l'alésage de réception de soupape de séparation et de soupape d'inversion (1, 6), lequel conduit de fluide sous pression présente une liaison à l'un des deux raccords de générateur de pression de freinage (5), l'un des alésages de capteur de pression (12) étant à cet effet orienté en alignement avec le conduit de fluide sous pression (4b) traversant l'alésage de réception de soupape de séparation et de soupape d'inversion (1, 6).

2. Groupe hydraulique selon la revendication 1, **caractérisé en ce que** les alésages de réception de soupape de séparation (1) sont réalisés sous forme d'alésages borgnes qui débouchent dans le corps de réception (2) à chaque fois en position transversale entre deux raccords de frein de roue (3) d'un circuit de freinage.

3. Groupe hydraulique selon la revendication 1 ou 2, **caractérisé en ce qu'**une distance est prévue respectivement entre deux raccords de frein de roue (3) pour le guidage d'un conduit de fluide sous pression (4) relié aux alésages de réception de soupape de séparation (1), lequel conduit de fluide sous pression relie le raccord de générateur de pression de freinage (5) associé à un circuit de freinage, par le biais de l'alésage de réception de soupape de séparation (1) associé, aux deux alésages de réception de soupape de la première rangée de soupapes (X) associés au circuit de freinage respectif.

4. Groupe hydraulique selon la revendication 1, **caractérisé en ce que** la première rangée de soupapes (X) est disposée entre les alésages de réception de soupape de séparation (1) et les alésages de réception de soupape d'inversion (6), les alésages de réception de soupape (7) de la première rangée de soupapes (X) ainsi que les alésages de réception de soupape de séparation et de soupape d'inversion (1, 6) débouchant en agencement en parallèle dans la première surface de flanc (F1) du corps de réception (2).

5. Groupe hydraulique selon l'une quelconque des revendications précédentes, **caractérisé en ce que** les alésages de réception de soupape de séparation (1) sont disposés en alignement avec l'alésage de réception de soupape d'inversion (6) à chaque fois entre une paire de raccords de frein de roue (3).

6. Groupe hydraulique selon la revendication 4, **caractérisé en ce que** deux chambres d'amortissement de bruit (8) débouchent en agencement diamétral dans une surface latérale (S1) respective du corps de réception (2), transversalement aux alésages de réception de soupape de séparation (1), laquelle surface latérale est limitée par la première et une deuxième surface de flanc (F1, F2).

7. Groupe hydraulique selon la revendication 6, **caractérisé en ce que** les deux chambres d'amortissement de bruit (8) sont disposées parallèlement à l'alésage de pompe (9) et sont respectivement traversées transversalement par un conduit de fluide sous pression (4a) qui s'étend, pour raccorder les chambres d'amortissement de bruit (8) à l'alésage de pompe (9), à partir d'une surface latérale (S2) supplémentaire du corps de réception (2) jusque dans la région de haute pression de l'alésage de pompe (9).

8. Groupe hydraulique selon la revendication 7, **caractérisé en ce que** tous les raccords de frein de roue (3) nécessaires pour un système de freinage à deux circuits débouchent dans la surface latérale (S2) supplémentaire entre les deux conduits de fluide sous pression (4a) nécessaires pour les deux chambres d'amortissement de bruit (8), les points de débouché des deux conduits de fluide sous pression (4a) dans la surface latérale (S2) supplémentaire étant fermés de manière étanche au fluide sous pression au moyen de corps à enfoncer.

9. Groupe hydraulique selon la revendication 6, **caractérisé en ce que** les deux raccords de générateur de pression de freinage (5) débouchent directement dans la deuxième surface de flanc (F2), les raccords de générateur de pression de freinage (5) étant espacés des raccords de frein de roue (3) disposés dans le plan des raccords de générateur de pression de freinage (5) par les chambres d'amortissement de bruit (8) débouchant dans la surface latérale (S1).

10. Groupe hydraulique selon la revendication 6, **caractérisé en ce que** deux alésages d'amortisseur de pulsations (11) débouchent dans le corps de réception (2), entre l'alésage de pompe (9) et les deux alésages d'accumulateur basse pression (10), à partir de la direction de la deuxième surface de flanc (F2), chaque alésage d'amortisseur de pulsations (11) étant raccordé à un conduit de fluide sous pression (4d) qui relie respectivement l'un des deux alésages d'accumulateur basse pression (10) à la région d'aspiration de l'alésage de pompe (9).

11. Groupe hydraulique selon la revendication 1, **caractérisé en ce qu'**au moins l'un des alésages de capteur de pression (12) est relié à un alésage de réception de soupape (13) de la deuxième rangée de soupapes (Y), le corps de réception (2) étant à cet effet traversé par au moins un conduit de fluide sous pression (4c) sur la surface latérale opposée à la surface latérale (S2) supplémentaire, lequel conduit de fluide sous pression traverse l'alésage de capteur de pression (12) en direction de l'alésage de réception de soupape (13) associé dans la deuxième rangée de soupapes (Y).

12. Groupe hydraulique selon la revendication 1, **caractérisé en ce qu'**un alésage de capteur (14) pour recevoir un transmetteur de signal de rotation et/ou de position est prévu entre les deux rangées de soupapes (X, Y), afin de détecter la position des pistons de pompe dans l'alésage de pompe (9), l'alésage de capteur (14) débouchant à cet effet dans un alésage de logement de moteur (15) débouchant transversalement à l'alésage de pompe (9), dans lequel alésage de logement de moteur est inséré un entraînement de pompe.

13. Groupe hydraulique selon la revendication 1, **caractérisé en ce qu'**un alésage de fuite (16) débouche dans le corps de réception (2) entre les deux alésages d'accumulateur basse pression (10), à partir de la direction d'une deuxième surface de flanc (F2) orientée diamétralement par rapport à la première surface de flanc (F1), l'alésage de fuite (16) étant raccordé à l'alésage de pompe (9) par le biais d'un conduit de pression (4e) disposé entre les alésages d'accumulateur basse pression (10).

14. Groupe hydraulique selon la revendication 6, **caractérisé en ce que** le corps de réception (2) est pourvu de plusieurs alésages traversants (17) pour la fixation d'un appareil de commande à la première surface de flanc (F1) et d'un moteur électrique à la deuxième surface de flanc (F2), lesquels alésages traversants sont traversés par plusieurs vis à la manière d'un tirant, afin de fixer l'appareil de commande et le moteur électrique au corps de réception (2).
